# EUROPEAN PATENT APPLICATION

(11) **EP 4 782 887 A1**
(43) Date of publication of application: **29.07.2026**
(21) Application number: 24900310.4
(22) Date of filing: 22.10.2024
(51) Int. Cl.: G01W 1/10

(54) **INFORMATION PROCESSING DEVICE, INFORMATION PROCESSING METHOD, AND PROGRAM**

(30) Priority: 06.12.2023 JP 2023206403
(71) Applicant: Japan Weather Association, Tokyo 170-6055 (JP); University of Tsukuba, Ibaraki 305-8577 (JP)
(72) Inventor: OKOSHI Kumi, Tokyo 170-6055 (JP); UEDA Hiroaki, Tsukuba-shi, Ibaraki 305-8577 (JP); SUZUKI Haruka, Tokyo 170-6055 (JP); SUNAGA Tomohiro, Tokyo 170-6055 (JP); KOIKE Takako, Tokyo 170-6055 (JP)
(74) Representative: HGF
(86) International application number: PCT/JP2024/037493
(87) International publication number: WO 2025/121014

(57) **Abstract**

The present invention conducts accurate long-term weather forecasting one month or more in the future, including extreme high and low temperatures, heavy rainfall, droughts, the timing of the end of the rainy season, and the number of typhoon approaches. The index acquisition unit 51 acquires the indices of the remote region from the numerical forecast model-based index computation device 2, and calculates indices focusing on meteorological phenomena correlated between a forecast region and a remote region, as forecasting data (indices), and provides the data to the weather forecasting unit 52. The weather forecasting unit 52 conducts long-term weather forecasting for the forecast region, based on the indices (forecasting data) of the remote region. The weather forecasting unit 52 conducts long-term weather forecasting for the forecast region using the forecasting formula regression coefficient 61 obtained through predetermined machine learning. The forecasting formula regression coefficient 61 is generated or updated by the learning unit 54.

## Description

### TECHNICAL FIELD

The present invention relates to an information processing device, an information processing method, and a program.

### BACKGROUND ART

Long-term weather forecasting one month or more in the future (see, for example, Patent Document 1) is in high demand across various fields, and is also disclosed in, for example, Patent Document 1.

### Citation List

### Patent Document

Patent Document 1: Japanese Unexamined Patent Application, Publication No. 2022-191176

### DISCLOSURE OF THE INVENTION

### Problems to be Solved by the Invention

However, long-term weather forecasting one month or more in the future has physical limitations, the accuracy of weather forecasting for mid- and high-latitude regions using numerical forecast models is low, and predicting extreme high or low temperatures, heavy rainfall, or droughts is currently unfeasible. Consequently, guidance supporting forecasting work, such as the correction of overhead grid point values in the forecast target areas in numerical forecast models, as used by the Japan Meteorological Agency, shows low accuracy in forecasting one month or more in the future. This type of guidance, which only uses overhead grid point values in numerical forecast models, cannot represent significant economic factors, such as the timing of the end of the rainy season or the number of typhoon approaches.

The present invention has been made in light of the above circumstances, and an object of the present invention is to accurately conduct long-term weather forecasting one month or more in the future, including extreme high and low temperatures, heavy rainfall, droughts, the timing of the end of the rainy season, and the number of typhoon approaches. Means for Solving the Problems

In order to achieve the above object, one aspect of the information processing device according to the present invention includes:
an index acquisition unit that acquires an index of a remote region from a calculation unit that calculates an index by focusing on meteorological phenomena correlated between a forecast region and a remote region; and
a weather forecasting unit that conducts long-term weather forecasting for the forecast region, based on the index of the remote region.

### Effects of the Invention

According to the present invention, long-term weather forecasting one month or more in the future can be with higher accuracy conducted, including extreme high and low temperatures, heavy rainfall, droughts, the timing of the end of the rainy season, and the number of typhoon approaches.

### BRIEF DESCRIPTION OF THE DRAWINGS

FIG. 1 is a diagram illustrating an example configuration of an information processing system, including a weather forecasting device as an embodiment of the information processing device of the present invention;
FIG. 2 is a block diagram illustrating an example of the hardware configuration of the weather forecasting device within the information processing system illustrated in FIG. 1;
FIG. 3 is a functional block diagram illustrating an example of the functional configuration of the weather forecasting device illustrated in FIG. 2;
FIG. 4 is a diagram illustrating a specific first example of long-term weather forecasting conducted by the weather forecasting device with the functional configuration illustrated in FIG. 3;
FIG. 5 is a diagram illustrating a specific second example of long-term weather forecasting conducted by the weather forecasting device with the functional configuration illustrated in FIG. 3;
FIG. 6 is a diagram illustrating a specific third example of long-term weather forecasting conducted by the weather forecasting device with the functional configuration illustrated in FIG. 3; and
FIG. 7 is a diagram illustrating a specific fourth example of long-term weather forecasting conducted by the weather forecasting device with the functional configuration illustrated in FIG. 3.

### PREFERRED MODE FOR CARRYING OUT THE INVENTION

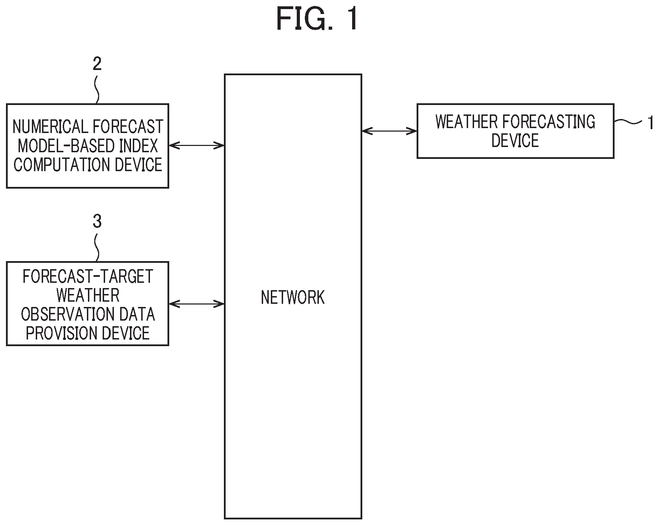

Hereinafter, embodiments of the present invention will be described with reference to the drawings. FIG. 1 is a diagram illustrating an example configuration of an information processing system, including a weather forecasting device as an embodiment of the information processing device of the present invention.

The information processing system, as illustrated in FIG. 1, includes a weather forecasting device 1, a numerical forecast model-based index computation device 2, and a forecast-target weather observation data provision device 3. These devices are interconnected via a predetermined network, such as the Internet.

The numerical forecast model-based index computation device 2 is an information processing device that calculates indices focusing on meteorological phenomena correlated between a forecast region and a remote region. The weather forecasting device 1 is an embodiment of the information processing device, to which the present invention is applied, and conducts long-term weather forecasting for the forecast region, based on the indices of the remote region computed by the numerical forecast model-based index computation device 2.

Here, "long-term weather forecasting" refers to weather forecasting over a predetermined period one month or more in the future. In one aspect, this period may be two months or more in the future; and in another aspect, this period may be three months or more in the future. The forecast region is a region where long-term weather forecasting is conducted, with examples including, but not limited to, Japan, the United States of America, or Europe. The remote region is a region at a distance from the forecast region, separated to a degree that the weather phenomena are not directly related to each other within the same timeframe. For example, in a case where the forecast region is Japan, the remote region may be the subtropical or tropical areas of the Indian Ocean or near the Philippines. Alternatively, in a case where the forecast region is the United States of America, the remote region may be the El Nino monitoring region.

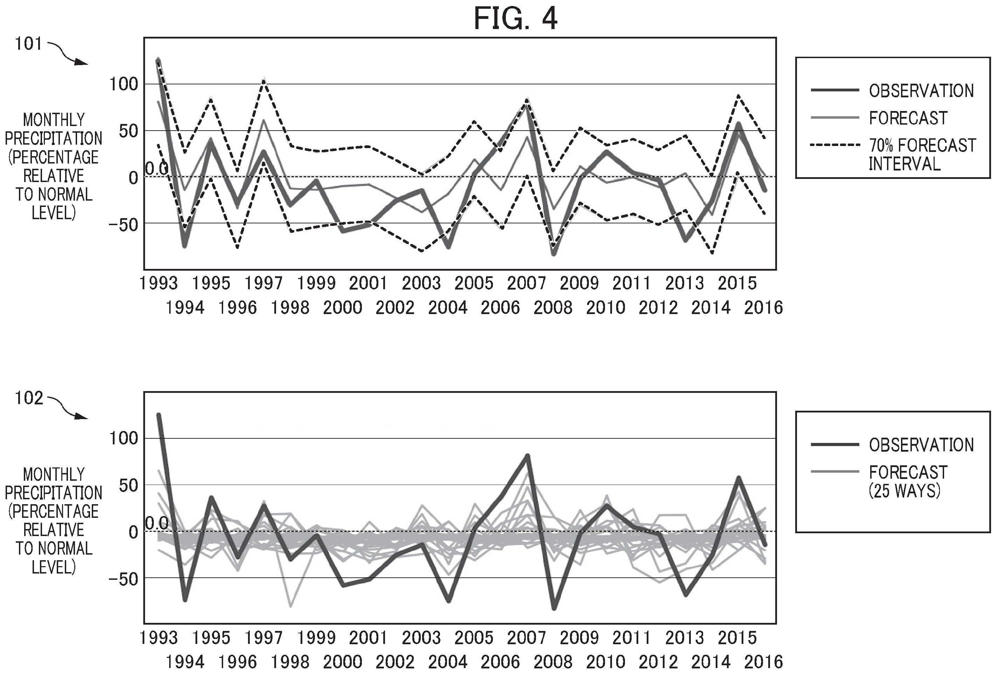

Specifically, for example, the numerical forecast model-based index computation device 2 computes an index representing the strength of convective activity in areas such as the Indian Ocean or near the Philippines. Based on this index, the weather forecasting device 1 forecasts the sunlight duration in Japan for a predetermined month one month or more beyond a specified time point (for example, July relative to a March time point). For example, the numerical forecast model-based index computation device 2 computes an index representing sea surface temperature changes in the El Nino monitoring region. Based on this index, the weather forecasting device 1 forecasts precipitation in the United States of America for a predetermined month one month or more beyond a specified time point (for example, July relative to a March time point). Specific examples of long-term weather forecasting for the forecast region, based on indices from the remote region, will be described later with reference to FIGS. 4 to 7.

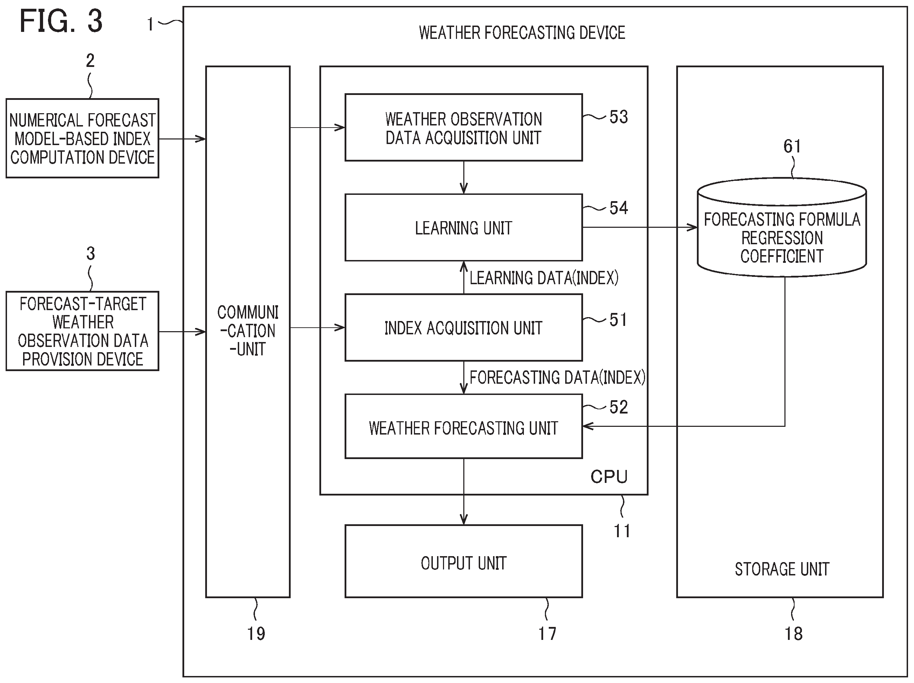

Here, the weather forecasting device 1 of the present embodiment can conduct long-term weather forecasting for the forecast region using a model obtained from predetermined machine learning (such as the forecasting formula regression coefficient 61 described later in FIG. 3). When the model is generated or updated through such predetermined machine learning, the forecast-target weather observation data provision device 3 provides actual weather observation data of the forecast region as part of the training data. Details of the predetermined machine learning will be described later in the description of the forecasting formula regression coefficient 61, as illustrated in FIG. 3. The forecasting formula regression coefficient herein is not restricted by any specific calculation method.

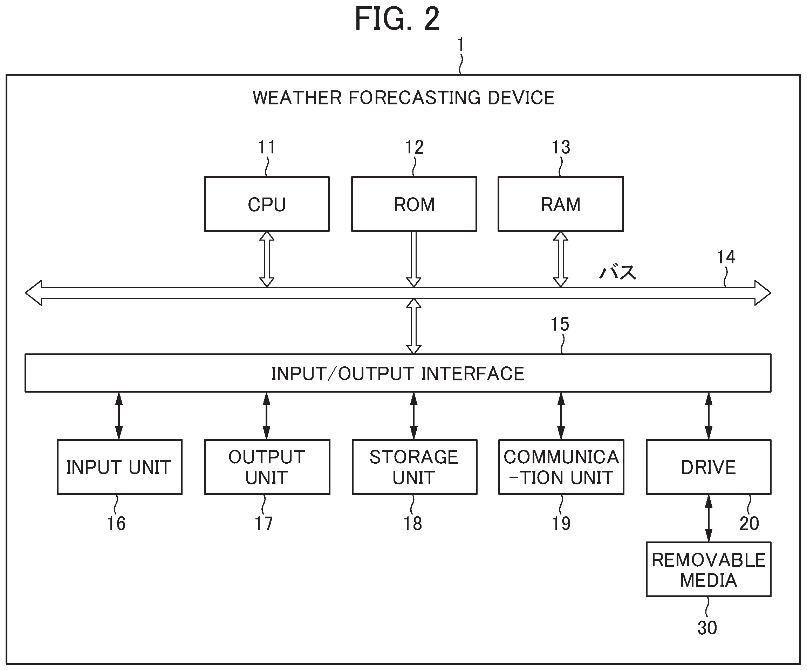

FIG. 2 is a block diagram illustrating an example of the hardware configuration of the weather forecasting device within the information processing system illustrated in FIG. 1.

The CPU 11 executes various processing in accordance with programs recorded in the ROM 12 or programs loaded into the RAM 13 from the storage unit 18. The RAM 13 stores, as needed, data required by the CPU 11 for executing various processing.

The CPU 11, the ROM 12, and the RAM 13 are interconnected via a bus 14. The bus 14 is also connected to an input/output interface 15. The input/output interface 15 is connected to an input unit 16, an output unit 17, a storage unit 18, a communication unit 19, and a drive 20.

The input unit 16, composed of a keyboard or similar device, inputs various types of information. The output unit 17, composed of a display such as an LCD or a speaker, outputs various types of information in the form of images or audio. The storage unit 18, composed of a DRAM (Dynamic Random Access Memory) or the like, stores various data. The communication unit 19 communicates with other devices (for example, the numerical forecast model-based index computation device 2 and the forecast-target weather observation data provision device 3, as illustrated in FIG. 1) via a network N, which includes the Internet.

Removable media 30, such as a magnetic disk, optical disk, magneto-optical disk, or semiconductor memory, are attached to the drive 20 as appropriate. Programs read from the removable media 30 by the drive 20 are installed in the storage unit 18 as needed. The removable media 30 can also store various data stored in the storage unit 18, in a manner similar to the storage unit 18.

Although not illustrated, the numerical forecast model-based index computation device 2 and the forecast-target weather observation data provision device 3, as illustrated in FIG. 1, can also be configured fundamentally similar to the hardware configuration as illustrated in FIG. 2. Accordingly, the description of the hardware configurations of the numerical forecast model-based index computation device 2 and the forecast-target weather observation data provision device 3 is omitted.

The cooperation of various hardware and software components constituting the information processing system illustrated in FIG. 1, including the weather forecasting device 1 illustrated in FIG. 2, can conduct long-term weather forecasting for the forecast region, based on indices focusing on meteorological phenomena correlated between the forecast region and the remote region.

FIG. 3 is a functional block diagram illustrating an example of the functional configuration of the weather forecasting device 1 as illustrated in FIG. 2, within the information processing system as illustrated in FIG. 1.

As illustrated in FIG. 3, an index acquisition unit 51, a weather forecasting unit 52, a weather observation data acquisition unit 53, and a learning unit 54 function within the CPU 11 of the weather forecasting device 1. The forecasting formula regression coefficient 61 is stored in a region within the storage unit 18.

The index acquisition unit 51 acquires the indices of the remote region from the numerical forecast model-based index computation device 2 that computes indices focusing on meteorological phenomena correlated between the forecast region and the remote region. These indices are acquired as forecasting data (indices) and provided to the weather forecasting unit 52. The weather forecasting unit 52 conducts long-term weather forecasting for the forecast region, based on the indices (forecasting data) of the remote region.

The weather forecasting unit 52 of the present embodiment conducts long-term weather forecasting for the forecast region using the forecasting formula regression coefficient 61 obtained through predetermined machine learning. The forecasting formula is represented as Y = F(X, a), where Y denotes the weather observation data to be forecasted, X denotes the indices from the numerical forecast model, and a denotes the regression coefficient. The forecasting formula regression coefficient 61 is generated or updated by the learning unit 54. The functional configuration during the learning phase is described below.

The index acquisition unit 51 acquires past simulation data of indices for the remote region, extending until after a predetermined period, from the numerical forecast model, as learning data (indices) from the numerical forecast model-based index computation device 2, and provides the data to the learning unit 54. Specifically, for example, the index acquisition unit 51 acquires simulation data of sea surface temperatures and convective activities for the remote region up to seven months in advance, based on past numerical forecast models, as learning data (indices) from the numerical forecast model-based index computation device 2, and provides the data to the learning unit 54.

The weather observation data acquisition unit 53 acquires actual weather observation data for the forecast region, as learning data from the forecast-target weather observation data provision device 3, and provides the data to the learning unit 54.

The learning unit 54 analyzes the relationship between the learning data (indices) acquired by the index acquisition unit 51 and the learning data (actual weather observation data) acquired by the weather observation data acquisition unit 53 through predetermined machine learning, thereby generating or updating the forecasting formula regression coefficient 61, which serves as a relational expression for explaining the long-term weather observation results of the forecast region, based on the indices of the remote region.

As a result, the index acquisition unit 51 and the weather forecasting unit 52 function as described above in the forecasting/operational phase. Specifically, for example, in a case where the index acquisition unit 51 acquires forecasts of sea surface temperatures and convective activities in the remote region up to seven months in advance, based on a new numerical forecast model as forecasting data (indices), the index acquisition unit 51 provides the data to the weather forecasting unit 52. The weather forecasting unit 52 incorporates the indices (forecasting data) of the remote region into the forecasting formula regression coefficient 61 (relational expression), and conducts long-term weather forecasting for the forecast region.

Next, specific examples of long-term weather forecasting conducted by the weather forecasting device with the functional configuration as illustrated in FIG. 3 will be described. FIGS. 4 to 7 are diagrams illustrating specific first through fourth examples, respectively, of long-term weather forecasting conducted by the weather forecasting device with the functional configuration as illustrated in FIG. 3.

In FIG. 4, the long-term weather forecast results 101 of the first example (hereinafter referred to as "first example results 101 of the present embodiment"), to which the present embodiment is applied, indicate the July precipitation levels (percentage relative to the normal level) forecasted in January of each year (1993 to 2016), in which the Pacific side of Western Japan is set as the forecast region. In the first example results 101 of the present embodiment, forecasts of convective activity in the subtropical or tropical Indian Ocean and near the Philippines, based on a numerical forecast model, are adopted as the indices of the remote region. In the first example results 101 of the present embodiment, the thick solid line represents observations (actual weather observation data values). The thin solid line represents forecasts (results of long-term weather forecasting). The dashed line represents the 70% forecast interval.

For comparison with the first example results 101 of the present embodiment, FIG. 4 also illustrates the long-term weather forecast results 102 obtained using a conventional method (forecasts based on the precipitation indices from overhead grid point values in the numerical forecast model), hereinafter referred to as "conventional method results 102".

It is understood that the conventional method results 102 failed to forecast extreme rainfall or drought six months in advance, whereas the first example results 101 of the present embodiment were capable of forecasting extreme rainfall or drought in increased cases. It is also understood that the forecast interval in the first example results 101 of the present embodiment allowed for grasping the expected error range.

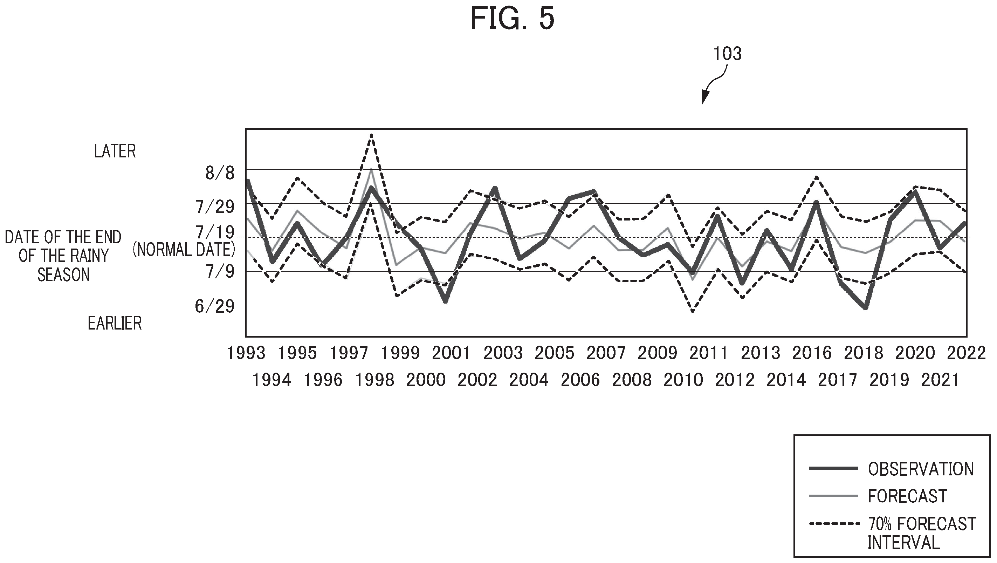

In FIG. 5, the long-term weather forecast results 103 of the second example (hereinafter referred to as "second example results 103 of the present embodiment"), to which the present embodiment is applied, indicate the end of the rainy season (deviations from the normal date) forecasted in January of each year (1993 to 2022), in which the Kanto-koshin-etsu region of Japan is set as the forecast region. In the second example results 103 of the present embodiment, forecasts of convective activities in the subtropical or tropical Indian Ocean and near the Philippines, based on a numerical forecast model, are adopted as the indices of the remote region. In the second example results 103 of the present embodiment, the thick solid line represents observations (actual weather observation data values). The thin solid line represents forecasts (results of long-term weather forecasting). The dashed line represents the 70% forecast interval.

Although not illustrated in FIG. 5, the guidance by the conventional method (method using overhead grid point values in the numerical forecast model) failed to represent the "date" of the end of the rainy season. In contrast, it is understood that the second example results 103 of the present embodiment were capable of forecasting the date of events such as the end of the rainy season by applying the weather forecasting device 1 of the present embodiment.

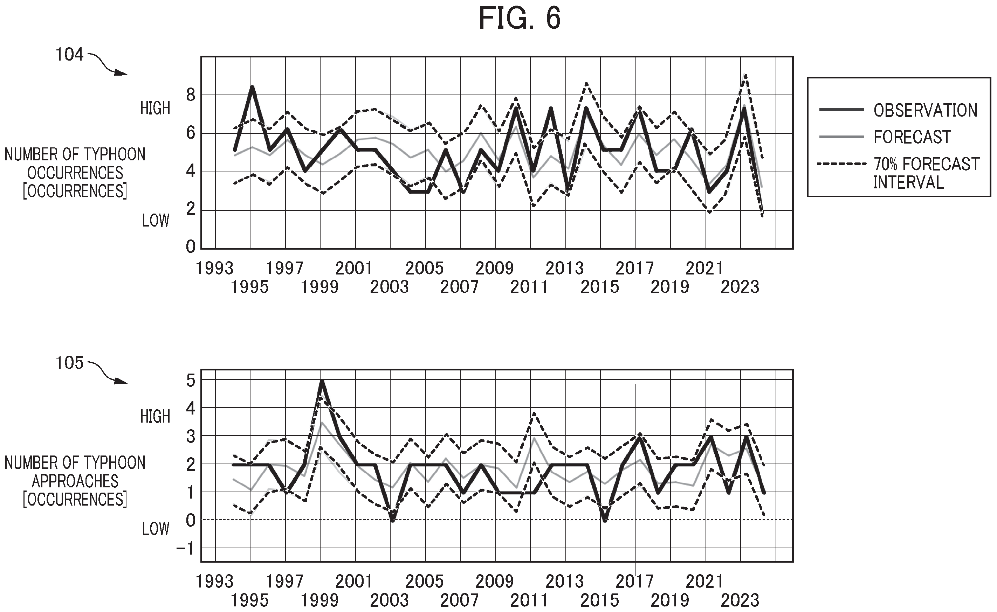

In FIG. 6, the long-term weather forecast results 104 of the third example (hereinafter referred to as "third example results 104 of the present embodiment"), to which the present embodiment is applied, indicate the number of typhoon occurrences in September, forecasted in June of each year (1993 to 2023), in which Japan is set as the forecast region. The long-term weather forecast results 105 of the third example (hereinafter referred to as "third example results 105 of the present embodiment"), to which the present embodiment is applied, indicate the number of typhoon approaches to the mainland in September, forecasted in June of each year (1993 to 2023), in which Japan is set as the forecast region. Here, the "mainland" refers to Hokkaido, Honshu, Shikoku, and Kyushu. In the third example results 104 and 105 of the present embodiment, forecasts of convective activities in the subtropical or tropical Indian Ocean and near the Philippines, based on a numerical forecast model, are adopted as the indices of the remote region. In the third example results 104 and 105 of the present embodiment, the thick solid line represents observations (actual weather observation data values). The thin solid line represents forecasts (results of long-term weather forecasting). The dashed line represents the 70% forecast interval.

It is understood that the third example results 104 and 105 of the present embodiment were capable of forecasting the trends in the number of typhoon occurrences and approaches, whether high or low, by applying the weather forecasting device 1 of the present embodiment.

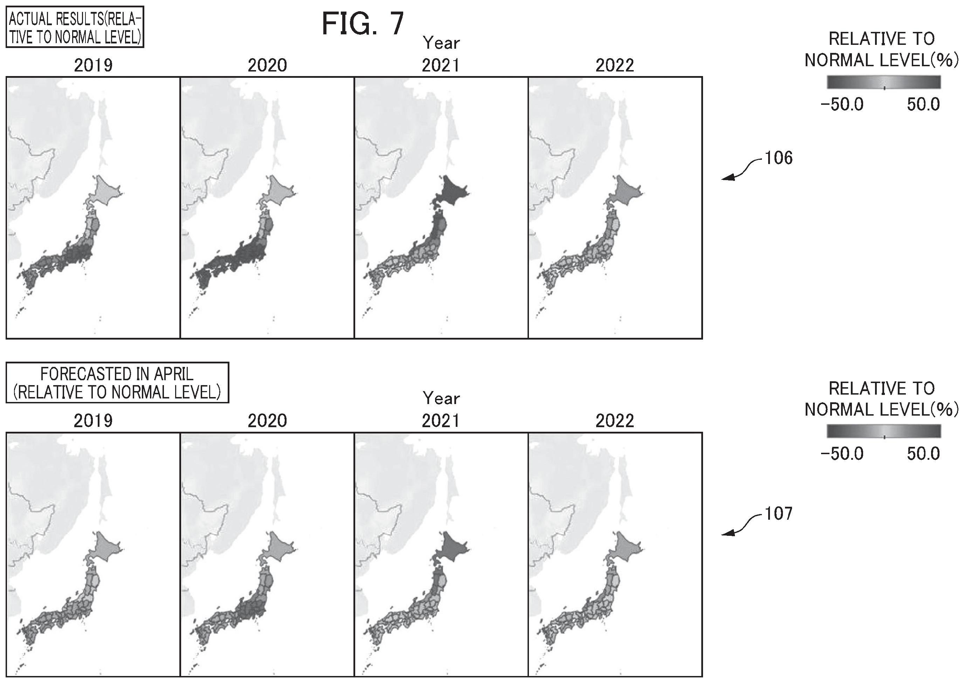

In FIG. 7, the actual results 106 for comparison with the fourth example (hereinafter referred to as "fourth example actual results 106") indicate the sunlight duration in July of each year (2019 to 2022), in which Japan is set as the forecast region. The long-term weather forecast results 107 of the fourth example (hereinafter referred to as "fourth example results 107 of the present embodiment"), to which the present embodiment is applied, indicate the sunlight duration in July, forecasted in April of each year (2019 to 2022), in which Japan is set as the forecast region. In the fourth example results 107 of the present embodiment, forecasts of convective activities in the subtropical or tropical Indian Ocean and near the Philippines, based on a numerical forecast model, are adopted as the indices of the remote region.

Through comparison of the fourth example actual results 106 with the fourth example results 107 of the present embodiment, it is understood that the general trends in regional sunlight duration, whether in higher or lower ranges, can be captured by applying the weather forecasting device 1 of the present embodiment.

While one embodiment of the present invention has been described above, the present invention is not limited to the described embodiment; modifications, improvements, and the like within the range allowing for achieving the objects of the present invention are deemed to be included within the scope of the present invention.

For example, in the examples illustrated in FIGS. 4 to 7, Japan is adopted as the forecast region, and convective activities in the subtropical and tropical areas of the Indian Ocean and near the Philippines are adopted as the indices of the remote region; however, the present invention is not limited thereto. Specifically, for example, as described above, the United States of America may be adopted as the forecast region, and the sea surface temperatures in the El Nino monitoring area may be adopted as the indices of the remote region.

The hardware configuration of the weather forecasting device 1, as illustrated in FIG. 2, is merely an example for achieving the objects of the present invention and is not particularly limited.

The functional block diagram, as illustrated in FIG. 3, is merely an example and is not particularly limited. That is, the functions only need to be capable of executing the described processing as a whole, and the selection of functional blocks to realize these functions is not restricted to the example illustrated in FIG. 3.

The locations of the functional blocks and databases are also not limited to those illustrated in FIG. 3 and may be chosen arbitrarily. Specifically, for example, the learning unit 54, along with the index acquisition unit 51 and the weather observation data acquisition unit 53 for acquiring learning data, may be transferred to a dedicated, separate information processing device (not illustrated). Alternatively, a single information processing device (not illustrated) may incorporate the functions of both the numerical forecast model-based index computation device 2 and the weather forecasting unit 52. Additionally, for example, the forecasting formula regression coefficient 61 may also be stored in the storage device of another information processing device (not illustrated).

The series of processing described above may be executed by hardware, by software, or by a combination of both. A single functional block may be configured solely by hardware, solely by software, or by a combination of hardware and software.

When executing the series of processing by software, the program constituting the software is installed in a computer or the like from a network or a recording medium. The computer may be a computer embedded in dedicated hardware. The computer may also be a computer capable of executing various functions by installing various programs, such as a server and a general-purpose smartphone or personal computer.

The recording medium containing such a program is not limited to a removable media (not illustrated) distributed separately from the main device to provide the program to users, but may also be a recording medium embedded in the main device itself and provided to users in the pre-installed state.

In this specification, steps describing a program recorded in a recording medium include not only sequential processing executed in time order but also processing that are not necessarily time-sequential, which may be executed in parallel or individually.

In summary, the information processing device, to which the present invention is applied, only needs to take the following configuration and can take various forms of embodiments. Namely, the information processing device (e.g., the weather forecasting device 1 as illustrated in FIG. 1), to which the present invention is applied, only needs to include: an index acquisition unit (e.g., the index acquisition unit 51 as illustrated in FIG. 3) that acquires the indices of the remote region (e.g., convective activities in the subtropical or tropical Indian Ocean and near the Philippines) from a calculation unit (e.g., the numerical forecast model-based index computation device 2 as illustrated in FIG. 1) that calculates indices focusing on meteorological phenomena correlated between a forecast region (e.g., Japan) and a remote region (e.g., the subtropical or tropical Indian Ocean and near the Philippines); and a weather forecasting unit (e.g., the weather forecasting unit 52 as illustrated in FIG. 3) that conducts long-term weather forecasting for the forecast region, based on the indices of the remote region (e.g., the long-term weather forecasts as illustrated in FIGS. 4 to 7).

This enables more accurate long-term weather forecasting one month or more in the future, including extreme high and low temperatures, heavy rainfall, droughts, the timing of the end of the rainy season, and the number of typhoon approaches.

Here, for example, the indices may include at least one of convective activities and sea surface temperatures in the remote region.

The information processing device may further include a learning unit (e.g., the learning unit 54 as illustrated in FIG. 3) that uses predetermined machine learning to analyze the relationship between the past simulation data of indices for the remote region, extending until after a predetermined period, based on the numerical forecast model, and actual weather observation data in the forecast region, thereby generating a model (e.g., the forecasting formula regression coefficient 61 as illustrated in FIG. 3) explaining the results of long-term weather observation in the forecast region, based on the indices of the remote region. The index acquisition unit may acquire forecasts of the indices for the remote region, extending until after a predetermined period, based on a new numerical forecast model, and
the weather forecasting unit may input the acquired forecasts of the indices of the remote region into the model and use the output of the model as the long-term weather forecast for the forecast region.

### EXPLANATION OF REFERENCE NUMERALS

- 1:: weather forecasting device
- 2:: numerical forecast model-based index computation device
- 3:: forecast-target weather observation data provision device
- 11:: CPU
- 12:: ROM
- 13:: RAM
- 14:: bus
- 15:: input/output interface
- 16:: input unit
- 17:: output unit
- 18:: storage unit
- 19:: communication unit
- 20:: drive
- 30:: removable media
- 51:: index acquisition unit
- 52:: weather forecasting unit
- 53:: weather observation data acquisition unit
- 54:: learning unit
- 61:: forecasting formula regression coefficient

## Claims

1. An information processing device, comprising:
an index acquisition unit that acquires an index of a remote region from a calculation unit that calculates the index focusing on a meteorological phenomenon correlated between a forecast region and the remote region; and
a weather forecasting unit that conducts long-term weather forecasting for the forecast region, based on the index of the remote region.

2. The information processing device according to claim 1, wherein the index of the remote region includes at least one of a convective activity and a sea surface temperature of a sea in the remote region.

3. The information processing device according to claim 1 or 2, further comprising:
a learning unit that analyzes, through predetermined machine learning, a relationship between past simulation data of the index of the remote region, extending until after a predetermined period, based on a numerical forecast model, and actual weather observation data in the forecast region, thereby generating a model explaining a result of long-term weather observation in the forecast region, based on the index of the remote region, wherein
the index acquisition unit acquires a forecast of the index of the remote region, extending until after the predetermined period, based on a new numerical forecast model, and
the weather forecasting unit inputs the acquired forecast of the index of the remote region into the model, and uses an output of the model as a long-term weather forecast for the forecast region.

4. An information processing method executed by an information processing device, the method comprising:
an index acquiring step of acquiring an index of a remote region from a calculation unit that calculates the index focusing on a meteorological phenomenon correlated between a forecast region and the remote region; and
a weather forecasting step of conducting long-term weather forecasting in the forecast region, based on the index of the remote region.

5. A program that causes a computer to execute control processing, the control processing comprising:
an index acquiring step of acquiring an index of a remote region from a calculation unit that calculates the index focusing on a meteorological phenomenon correlated between a forecast region and the remote region; and
a weather forecasting step of conducting long-term weather forecasting in the forecast region, based on the index of the remote region.
